# EUROPEAN PATENT SPECIFICATION

(11) **EP 2 417 399 B1**
(45) Date of publication and mention of the grant of the patent: **15.01.2020**
(21) Application number: 10761803.5
(22) Date of filing: 12.03.2010
(51) Int. Cl.: A01M 29/18, A01M 1/22, F24F 1/0007, A01M 1/10, A01M 1/20, F24F 1/0018, F24F 3/12, F24F 1/0057

(54) **AIR CONDITIONER**
KLIMAANLAGE
CLIMATISEUR

(30) Priority: 08.04.2009 KR 20090030465; 08.04.2009 KR 20090030466
(43) Date of publication of application: 15.02.2012
(73) Proprietor: LG Electronics Inc., Seoul 07336 (KR)
(72) Inventor: SHIM, Ho Jin, Changwon-si Kyungsangnam-do 641-110 (KR); LEE, Sung Hwa, Changwon-si Kyungsangnam-do 641-110 (KR); PARK, Tae Byoung, Changwon-si Kyungsangnam-do 641-110 (KR); PARK, Sung Kwan, Changwon-si Kyungsangnam-do 641-110 (KR)
(74) Representative: Plasseraud IP
(86) International application number: PCT/KR2010/001546
(87) International publication number: WO 2010/117142

(56) References cited:
- EP-A1- 1 815 740
- WO-A1-00/38512
- CN-Y- 2 479 416
- JP-A- 8 317 756
- JP-A- 2003 014 267
- KR-A- 20090 017 287
- KR-Y1- 850 001 554
- US-B1- 6 996 029

## Description

### [Technical Field]

The present invention relates to an air conditioner, and more particularly, to an air conditioner having a harmful insect extermination device for exterminating harmful insects.

### [Background Art]

In general, an air conditioner cools and heats indoor using a refrigerating cycle of a refrigerant formed with a compressor, a condenser, an expanding device, and an evaporator in order to provide more comfortable indoor environment to a user, or purifies air using a filter or an electric dust collector.

Korean Unexamined Utility Model Application No. 1999-0016601 discloses an air conditioner having a mosquito extermination device that can prevent approach of female mosquitoes by generating ultrahigh frequency waves at the front of an indoor device.

In an air conditioner having a conventional mosquito extermination device, because the mosquito extermination device is fixed to a front surface of an indoor device to generate ultrahigh frequency waves in only a front direction, in an indoor area, an arriving area of ultrahigh frequency waves generated by the mosquito extermination device is not wide.

An example of an air conditioner for elimination noxious insects can be found for instance in Korean Patent Application No. 2009-0017287.

### [Disclosure]

### [Technical Problem]

The present invention has been made in an effort to solve the above problems, and the present invention provides an air conditioner having a wide harmful insect extermination area at indoor by moving a harmful insect extermination device.

The present invention further provides an air conditioner for generating sound waves for exterminating harmful insects toward a position of a human body at indoor.

The present invention further provides a method of operating an air conditioner that can prevent waste of power consumption and effectively exterminate mosquitoes.

### [Technical Solution]

According to an aspect of the present invention, there is provided an air conditioner including: a main body in which an air inhalant port and an air discharge port are formed to discharge air after inhaling air and performing air-conditioning; and a harmful insect extermination module disposed at the main body to exterminate harmful insects of indoor, wherein the harmful insect extermination module includes: a harmful insect extermination device for exterminating harmful insects; and a harmful insect extermination device moving device for moving the harmful insect extermination device in order to exterminate harmful insects while moving the harmful insect extermination device.

The harmful insect extermination module further includes a moving case in which the harmful insect extermination device moving device is installed and for rotatably housing the harmful insect extermination device; and a moving case linear moving device for linearly moving the moving case to insert into the main body or to protrude to the outside of the main body.

The main body may have a penetrating hole for penetrating the moving case in a bottom surface so that the moving case moves downward to protrude to the lower side of the main body or moves upward to the inside of the main body.

The harmful insect extermination device may include a speaker for generating sound waves for exterminating the harmful insects, and in the moving case, an opening for passing through sound waves generated in the harmful insect extermination device may be formed long in a rotation direction of the harmful insect extermination device.

The moving case linear moving device may include: a rack provided in the moving case; a moving pinion engaged with the rack; and a moving motor for rotating the pinion so that the rack performs a linear motion when the pinion rotates.

The harmful insect extermination device moving device may include a rotation motor disposed to protrude a rotation axis connected to the harmful insect extermination device.

The harmful insect extermination device may include: a rotation bracket connected to a rotation axis of the rotation motor; and a speaker installed in the rotation bracket to generate sound waves for exterminating the harmful insects.

The harmful insect extermination device moving device may include: a rotation motor fixed to the main body and having a rotation axis for connecting the harmful insect extermination device; and a fixing case fixed to the main body and for rotatably housing the harmful insect extermination device therein.

The harmful insect extermination device moving device may include: a rotation motor fixed to the main body and having a protruded rotation axis; and a rotation case connected to the rotation axis to rotate by the rotation axis and for fixing the harmful insect extermination device therein.

The harmful insect extermination device may be disposed to generate sound waves toward the lower side of the front of the harmful insect extermination module.

The air conditioner may further include a human body detection unit for detecting a human body of indoor in which the main body is installed, wherein the harmful insect extermination device moving device moves the harmful insect extermination device in a direction toward a human body detected by the human body detection unit.

The human body detection unit may be installed to move together with the harmful insect extermination device.

The air conditioner may further include a controller for driving the harmful insect extermination device moving device so that the human body detection unit scans indoor, and for stopping, when the human body detection unit detects a human body while driving the harmful insect extermination device moving device, if the harmful insect extermination device faces a human body detected by the human body detection unit, the harmful insect extermination device moving device.

One of the human body detection unit and the harmful insect extermination device may be connected to the harmful insect extermination device moving device and the other one thereof may be connected to the one thereof.

The air conditioner may further include a moving case in which the harmful insect extermination device moving device is installed and for rotatably housing the harmful insect extermination device and the human body detection unit, and having an opening for receiving and transmitting sound waves generated in the harmful insect extermination device and a signal for detecting a human body.

### [Description of Drawings]

FIG. 1 is a perspective view illustrating an operating air conditioner according to a first exemplary embodiment of the present invention;
FIG. 2 is a perspective view illustrating a stopped air conditioner according to a first exemplary embodiment of the present invention;
FIG. 3 is an exploded perspective view illustrating an air conditioner according to a first exemplary embodiment of the present invention;
FIG. 4 is a block diagram illustrating a control process of an air conditioner according to a first exemplary embodiment of the present invention;
FIG. 5 is a longitudinal cross-sectional view of an air conditioner when a harmful insect extermination module shown in FIGS. 1 and 3 is protruded to the outside of a main body;
FIG. 6 is a longitudinal cross-sectional view of an air conditioner when a harmful insect extermination module shown in FIGS. 1 and 3 protects in a main body;
FIG. 7 is a perspective view illustrating a harmful insect extermination module shown in FIGS. 1 and 3;
FIG. 8 is a cross-sectional view of a harmful insect extermination module shown in FIGS. 1 and 3;
FIG. 9 is an enlarged perspective view illustrating a moving case linear moving device shown in FIGS. 5 and 6;
FIG. 10 is a longitudinal cross-sectional view of a major part of an air conditioner according to a second exemplary embodiment of the present invention;
FIG. 11 is a cross-sectional view of a major part of an air conditioner according to a second exemplary embodiment of the present invention;
FIG. 12 is a longitudinal cross-sectional view of a major part of an air conditioner according to a third exemplary embodiment of the present invention;
FIG. 13 is a cross-sectional view of a major part of an air conditioner according to a third exemplary embodiment of the present invention;
FIG. 14 is a longitudinal cross-sectional view of a major part of an air conditioner according to a fourth exemplary embodiment of the present invention;
FIG. 15 is a cross-sectional view of a major part of an air conditioner according to a fourth exemplary embodiment of the present invention;
FIG. 16 is a perspective view illustrating an operating air conditioner according to a fifth exemplary embodiment of the present invention;
FIG. 17 is a block diagram illustrating a control process of an air conditioner according to a fifth exemplary embodiment of the present invention;
FIG. 18 is a longitudinal cross-sectional view of an air conditioner when a harmful insect extermination module shown in FIG. 16 protrudes to the outside of a main body;
FIG. 19 is a cross-sectional view of a harmful insect extermination module shown in FIG. 16;
FIG. 20 is a flowchart illustrating a method of operating an air conditioner according to another exemplary embodiment of the present invention;
FIG. 21 is a longitudinal cross-sectional view of a major part of an air conditioner according to a sixth exemplary embodiment of the present invention;
FIG. 22 is a cross-sectional view of a major part of an air conditioner according to a sixth exemplary embodiment of the present invention;
FIG. 23 is a perspective view illustrating an operating air conditioner according to a seventh exemplary embodiment of the present invention;
FIG. 24 is a longitudinal cross-sectional view of a human body detection module shown in FIG. 23; and
FIG. 25 is a longitudinal cross-sectional view of a harmful insect extermination module shown in FIG. 23.

### [Best Mode]

Hereinafter, exemplary embodiments according to the present invention will be described in detail with reference to the accompanying drawings.

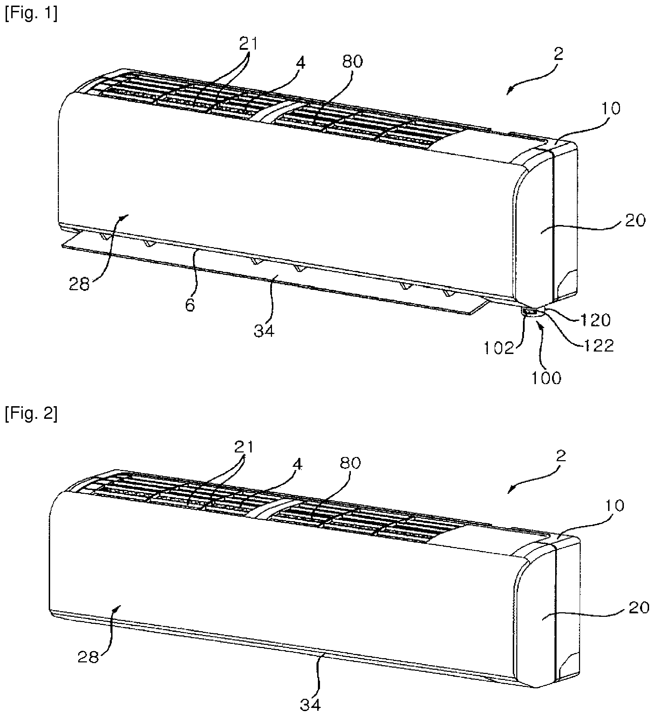

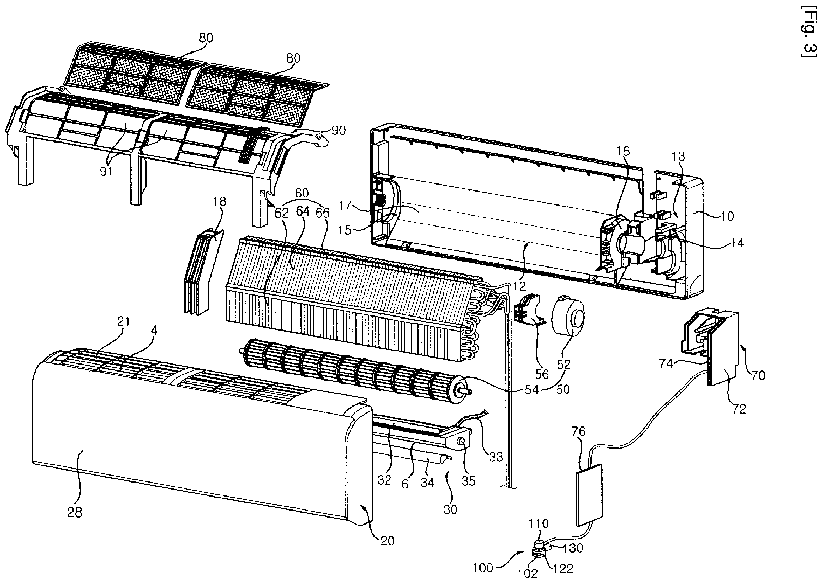

FIG. 1 is a perspective view illustrating an operating air conditioner according to a first exemplary embodiment of the present invention, FIG. 2 is a perspective view illustrating a stopped air conditioner according to a first exemplary embodiment of the present invention, and FIG. 3 is an exploded perspective view illustrating an air conditioner according to a first exemplary embodiment of the present invention.

The air conditioner according to the present exemplary embodiment includes a main body 2 for air-conditioning indoor and a harmful insect extermination module 100 installed in the main body 2 to exterminate harmful insects of indoor.

In the main body 2, an air inhalant port 4 for inhaling indoor air and an air discharge port 6 for discharging air-conditioned air are formed.

The main body 2 is an air-conditioning unit for inhaling air to the air inhalant port 4, for air-conditioning at indoor, and for discharging air through the air discharge port 6 and can be formed in a stand type air conditioner, a ceiling air conditioner, and a wall-mounted air conditioner, and hereinafter, a wall-mounted air conditioner is described as an example.

The main body 2 includes a chassis 10, a front frame 20, an inhalation grill 21, a front panel 28, and a discharge unit 30.

In the main body 2, the air inhalant ports 4 are each formed in a front surface and an upper surface of the main body 2, and the air discharge port 6 is formed in a lower surface of the main body 2.

In the main body 2, the front panel 28 can advance to the front or rotate about an upper part or a lower part to form an air inhalation passage between the front panel 28 and a front surface of the main body 2.

In the main body 2, the air inhalant port 4 is formed in an upper surface of the main body 2 and the air discharge port 6 is formed in a lower surface of the main body 2, and the front panel 28 is disposed to cover a front surface of the main body 2.

Hereinafter, in the main body 2, the air inhalant port 4 is formed in an upper part of the main body 2, particularly at the upper surface side of the main body 2, and the air discharge port 6 is formed in a lower part of the main body 2, particularly at the lower surface side of the main body 2, and the front panel 28 forms an external appearance of the front side of the air conditioner and rotates to protrude to the front about the upper part of the main body 2 in order to provide an AS service within the main body 2.

The chassis 10 is a kind of case installed in an indoor wall and in which a ventilation flow path for passing through air is formed, and for installing various parts.

In the chassis 10, a ventilation flow path guide 12 for guiding air inhaled into the air inhalant port 4 to the air discharge port 6 is formed, and an electronic unit 13 for installing various electronic parts is formed at the side of one of the left and the right of the ventilation flow path guide 12.

The ventilation flow path guide 12 forms a flow path of a fan 54 to be described later and includes left and right guides 15 and 16 protruded to the front from the chassis 10 and a central guide 17 formed between the left and right guides 15 and 16.

In one of the left and right guides 15 and 16, a heat exchanger supporter 18 for forming a flow path of air while supporting a heat exchanger 60 is installed.

A fan motor 52 to be described later is provided in the electronic unit 13, and a motor installation unit 14 for supporting the fan motor 52 protrudes to the front.

In the chassis 10, a controller 70, to be described later, for controlling the air conditioner is installed in the electronic unit 13.

The front frame 20 forms space together with the chassis 10 between the front frame 20 and the chassis 10 and is disposed at the front of the chassis 10.

The front frame 20 forms a ventilation flow path together with the ventilation flow path guide 12 of the chassis 10 and covers the electronic unit 13 formed in the chassis 10 to protect the electronic unit 13.

Openings are each formed in an upper surface and a front surface of the front frame 20, the upper opening operates as the air inhalant port 4, and the front opening 5 operates as a service hole for attachment and detachment or performing an AS service of a filter 80 to be described.

In the front frame 20, the front opening 5 is formed in the front-rear direction at the front of the ventilation flow path guide 12 of the chassis 10, and the upper opening is vertically formed at the upside of the front of the ventilation flow path guide 12 of the chassis 10.

The inhalation grill 21 protects the downside thereof while inhaling indoor air into the main body 2 and is formed in a grill shape in the air inhalant port 4, which is the upper opening of the front frame 20.

The discharge unit 30 guides the discharge of air-conditioned air within the main body 2 and is assembled using a fastening means such as a fastening member or a hanger means such as a hook in at least one of the chassis 10 and the front frame 20.

In the discharge unit 30, a drain unit 32 for receiving condensation water dropped from the heat exchanger 60 to be described later is formed in an upper surface of the discharge unit 30.

A drain connection hose 33 for guiding condensation water to the outside of the main body 2 is connected to the drain unit 32, and the air discharge port 6 is formed in a lower part of the drain unit 32.

A wind adjustment device for adjusting the wind of air passing through the air discharge port 6 is installed in the discharge unit 30.

The wind adjustment device includes a wind adjustment member 34 for adjusting the wind while guiding air passing through the air discharge port 6 and a wind adjustment member driving device 35 for rotating the wind adjustment member 34.

The wind adjustment member 34 is rotatably disposed at the main body 2, particularly at the discharge unit 30.

The wind adjustment member 34 includes a lateral wind adjustment member for adjusting the lateral wind of air passing through the air discharge port 6 and a vertical wind adjustment member for adjusting the vertical wind of air passing through the discharge port 6.

The wind adjustment member driving device 35 can be connected to the lateral wind adjustment member to rotate the lateral wind adjustment member about a vertical axis and can be connected to the vertical wind adjustment member to vertically rotate the vertical wind adjustment member about a horizontal axis.

The wind adjustment member 34 is rotatably disposed so that one of the lateral wind adjustment member and the vertical wind adjustment member open and shut the air discharge port 6.

The vertical wind adjustment member is disposed to open and shut the air discharge port 6, and the wind adjustment member driving device 35 is formed with a wind adjustment motor installed in a surface of one side of the left side and the right side of the discharge unit 30 to rotate the vertical wind adjustment member.

In the main body 2, a ventilator 50 for inhaling air to the air inhalant port 4, for passing through air to the inside of the main body 2, and for discharging air to the air discharge port 6, the heat exchanger 60 for exchanging heat of air inhaled into the main body 2 with that of a refrigerant, a controller 70 for controlling the air conditioner, a filter 80 for purifying air inhaled into the air inhalant port 4, and a filter frame 90 in which the filter 80 is mounted are installed.

The ventilator 50 includes a fan motor 52 installed in the motor installation unit 14 formed in the chassis 10, particularly in the electronic unit 13, and a fan 54 installed in a rotation axis of the fan motor 52 and positioned at the ventilation flow path guide 12.

The fan 54 is formed with a cross flow fan formed laterally long between ventilation flow path guides 15, 16, and 17, particularly between left and right flow path guides 15 and 16.

The ventilator 50 further includes a motor cover 56 installed in the chassis 10 to cover the fan motor 52.

The heat exchanger 60 is disposed to position at space of the main body 2, particularly at the rear of a front portion of the front frame 20 to position between the air inhalant port 4 and the fan 54.

The lower end of the heat exchanger 60 is installed at the upper side of the drain unit 32.

The heat exchanger 60 includes a vertical portion 62 vertically positioned at the upper side of the drain unit 32, a front inclined portion 64 formed to be inclined toward the upper side of the rear side from the upper side of the vertical portion 62, and a rear inclined portion 66 formed to be inclined toward the lower side of the rear from an upper part of the front inclined portion 64.

The controller 70 includes a control box 72 installed in the electronic unit 13 of the main body 2, a main controller 74 installed in the control box 72 to control the fan motor 52 of the ventilator 50 and the wind adjustment member driving device 35, and a harmful insect extermination module controller 76 for controlling the harmful insect extermination module 100.

The filter frame 90 is installed to position between the air inhalant port 4 and the heat exchanger 60.

The filter frame 90 has an opening 91 for passing through air and in which the filter 80 is disposed.

The harmful insect extermination module 100 includes a harmful insect extermination device 102 for removing or exterminating harmful insects such as mosquitoes positioned at indoor in which the air conditioner performs air-conditioning.

The harmful insect extermination device 102 can be formed as an electric harmful insect extermination device for killing harmful insects by heat or electric shock upon approach of harmful insects, an electric insecticide device for killing harmful insects by chemical agents, a trap net for killing harmful insects by confining and starving, or a speaker, which is a sound wave generator for generating sound waves of a specific frequency band in which harmful insects such as mosquitoes evade.

Hereinafter, the harmful insect extermination device 102 is formed with a speaker, which is a sound wave generator for generating sound waves of a specific frequency band in which harmful insects such as mosquitoes evade.

The harmful insect extermination module 100 is installed in the front panel 28, which is the front surface side of the main body 2, is installed in a lower plate of the chassis 10 or a lower plate of the front frame 20, which is the bottom surface side of the main body 2, or is installed in the discharge unit 30 positioned between the front surface side and the bottom surface side of the main body 2.

The harmful insect extermination modules 100 are each installed at the left side and the right side of the main body 2, and a left side harmful insect extermination module positioned at the left side of the main body 2 and a right side harmful insect extermination module positioned at the right side of the main body 2 can generate sound waves of a specific frequency band at the left side and the right side.

When the harmful insect extermination module 100 is installed so that the harmful insect extermination device 102 rotates or moves a position thereof, the harmful insect extermination device 102 can generate sound waves in a wide area of indoor while rotating or moving a position thereof.

The harmful insect extermination module 100 includes a harmful insect extermination device moving device for moving the harmful insect extermination device 102.

The harmful insect extermination device moving device is disposed at the main body 2 to rotate the harmful insect extermination device 102 or to move a position of the harmful insect extermination device 102 so that the harmful insect extermination device 102 generates sound waves while rotating and hereinafter, the harmful insect extermination device moving device rotates the harmful insect extermination device 102.

The harmful insect extermination device moving device includes a rotation motor 110 for generating a driving force for rotating the harmful insect extermination device 102.

The harmful insect extermination device moving device can rotate the harmful insect extermination device 102 in a state fixed to the main body 2 and can rotate the harmful insect extermination device 102 in a state movably disposed at the main body 2.

The harmful insect extermination device moving device is movably disposed together with a moving case 120 to be described later.

When the harmful insect extermination module 100 is in a harmful insect extermination mode, the moving case 120 protrudes to the outside of the main body 2 to allow sound waves to effectively propagate to indoor, and when the harmful insect extermination module 100 is not in a harmful insect extermination mode, the moving case 120 is inserted into the main body 2 to be protected by the main body 2.

The harmful insect extermination module 100 includes the moving case 120 for housing the harmful insect extermination device 102 therein and a moving case linear moving device for linearly moving the moving case 120.

The moving case 120 is disposed to protrude to the outside of the main body 2 or to insert into the main body 2.

The moving case 120 is a kind of carrier for moving a position of the harmful insect extermination device 102 to the inside/outside of the main body 2 while protecting the harmful insect extermination device 102, and space for housing the harmful insect extermination device 102 is formed within the moving case 120, and an opening 122 for passing through sound waves generated in the harmful insect extermination device 102 is formed in a circumferential portion of the moving case 120.

The opening 122 is formed long in a rotation direction of the harmful insect extermination device 102 so that the moving case 120 may not block sound waves generated in the harmful insect extermination device 102 upon rotating the harmful insect extermination device 102.

When the harmful insect extermination device 102 rotates in a lateral direction about a vertical axis, the opening 122 is formed long in a lateral direction along the circumferential portion of the moving case 120.

When the harmful insect extermination device 102 rotates in a vertical direction about a horizontal axis, the opening 122 is formed long in a vertical direction along the circumferential portion of the moving case 120.

The moving case linear moving device includes a moving motor 130 for generating a driving force for linearly moving the moving case 120.

In the harmful insect extermination module 100, the harmful insect extermination device 102, the rotation motor 110, and the moving motor 130 are controlled by the controller 70, particularly a harmful insect extermination module controller 76.

When the harmful insect extermination module 100 is in a harmful insect extermination mode, the harmful insect extermination module controller 76 controls the moving motor 130 so that the moving case 120 protrude to the outside of the main body 2, and the harmful insect extermination module controller 76 controls the rotation motor 110 and the harmful insect extermination device 102 so that the harmful insect extermination device 102 generates sound waves in which harmful insects such as mosquitoes evade in a wide area of indoor by being rotated within the moving case 120.

When the harmful insect extermination module 100 is not in a harmful insect extermination mode, the moving case 120 is protected by being inserted into the main body 2, and the harmful insect extermination module controller 76 controls the moving motor 130, the rotation motor 110, and the harmful insect extermination device 102 so that the harmful insect extermination device 102 does not generate sound waves.

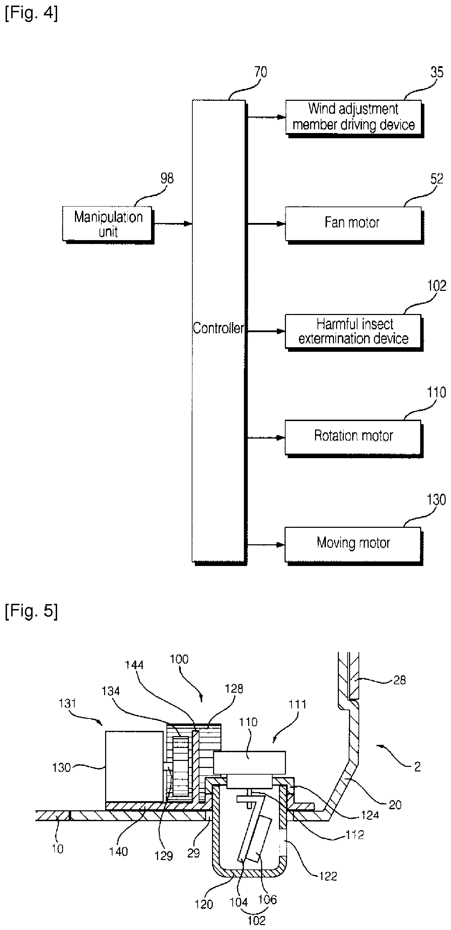

FIG. 4 is a block diagram illustrating a control process of an air conditioner according to a first exemplary embodiment of the present invention.

The air conditioner according to the present exemplary embodiment further includes a manipulation unit 98 for inputting a harmful insect extermination mode while manipulating operation of the main body 2.

The manipulation unit 98 can be formed with a remote control that can input an air-conditioning operation (hereinafter, referred to as an 'air-conditioning operation') such as a cooling operation, a heating operation, a dehumidification operation and a harmful insect extermination mode and a remote control reception unit for receiving a signal of the remote control and for outputting the signal to the controller 70, and can be formed with a control panel installed in the main body 2 to input an air-conditioning operation and a harmful insect extermination mode.

The controller 70 controls the fan motor 52 of the ventilator 50, the wind adjustment member driving device 35, and the harmful insect extermination module 100 according to an-air conditioning operation or a harmful insect extermination mode input to the manipulation unit 98, and the controller 70 controls the fan motor 52 of the ventilator 50, the wind adjustment member driving device 35, and the harmful insect extermination module 100 according to a single input of an air-conditioning operation, a single input of a harmful insect extermination mode, and an input of an air-conditioning operation and a harmful insect extermination mode.

The controller 70 controls the fan motor 52 of the ventilator 50 and the wind adjustment member driving device 35 according to whether or not an air-conditioning operation and drives the wind adjustment member driving device 35 in a wind adjustment mode while driving the fan motor 52 of the ventilator 50 upon performing an air-conditioning operation and drives the wind adjustment member driving device 35 in an air discharge port closing mode while stopping the fan motor 52 of the ventilator 50 upon stopping the air conditioner.

The controller 70 controls the harmful insect extermination module 100 according to a harmful insect extermination mode regardless of an air-conditioning operation, and if the air conditioner is in a harmful insect extermination mode while performing an air-conditioning operation, the controller 70 applies power to the harmful insect extermination module 100, and if the air conditioner is not in a harmful insect extermination mode while performing an air-conditioning operation, or if the air conditioner is stopped, the controller 70 intercepts a power source for applying power to the harmful insect extermination module 100.

The controller 70 controls the harmful insect extermination device 102 to generate sound waves of a specific frequency band of male mosquitoes.

In general, mosquitoes biting a human body are female mosquitoes copulated with male mosquitoes and after female mosquitoes copulate with male mosquitoes, the female mosquitoes evade sound waves of frequency bands of the male mosquitoes and when sound waves of a specific frequency band (for example, 370±10Hz) of the male mosquitoes are generated in the harmful insect extermination module 100 and are propagated at indoor, the number of mosquitoes biting a human body is minimized.

If a harmful insect extermination mode is input through the manipulation unit 98, the controller 70 drives the moving motor 130 in an exposure mode and thus controls the moving case 120 to expose to the outside of the main body 2 together with the harmful insect extermination device 102, and controls the rotation motor 110 to drive the harmful insect extermination device 102 in a rotation mode, and thus the harmful insect extermination device 102 generates sound waves while rotating.

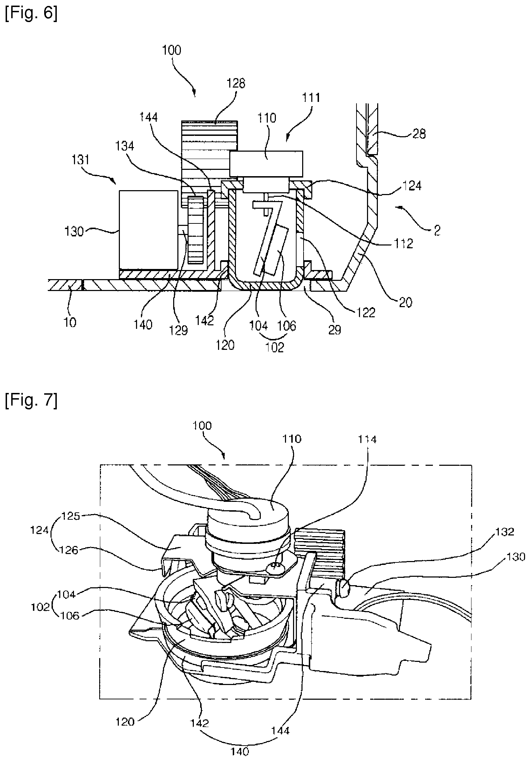

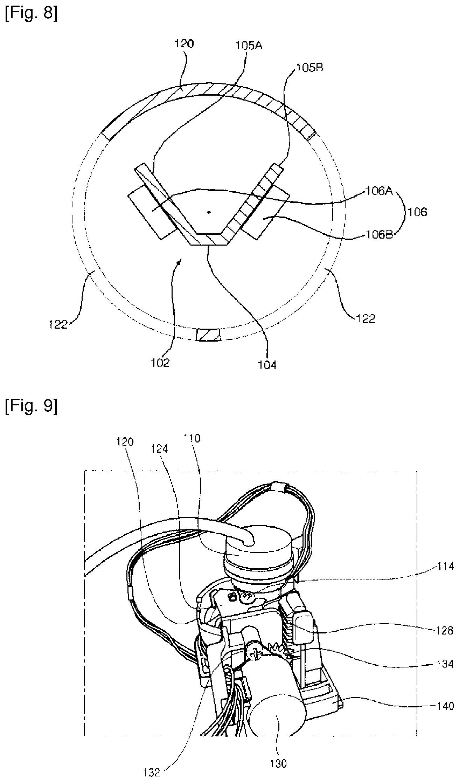

FIG. 5 is a longitudinal cross-sectional view of an air conditioner when a harmful insect extermination module shown in FIGS. 1 and 3 protrudes to the outside of a main body, FIG. 6 is a longitudinal cross-sectional view of an air conditioner when a harmful insect extermination module shown in FIGS. 1 and 3 is protected in a main body, FIG. 7 is a perspective view illustrating a harmful insect extermination module shown in FIGS. 1 and 3, FIG. 8 is a cross-sectional view of a harmful insect extermination module shown in FIGS. 1 and 3, and FIG. 9 is an enlarged perspective view illustrating a moving case linear moving device shown in FIGS. 5 and 6.

In a bottom portion of the main body 2, a penetration hole 29 for penetrating the moving case 120 is formed, and the moving case 120 falls to protrude to the lower side of the main body 2 through the penetration hole 29 or rises to insert into the main body 2.

In the main body 2, the penetration hole 29 is formed in at least one of a bottom plate of the front frame 20 and a bottom plate of the chassis 10.

In the harmful insect extermination module 100, the moving case 120 can directly penetrate through the penetration hole 29 while being supported by the penetration hole 29.

In the harmful insect extermination module 100, a frame 140 is installed in the main body 2 and the moving case 120, and the moving case 120 penetrates through the frame 140 and the penetration hole 29 while being supported by the frame 140.

The harmful insect extermination module 100 includes the frame 140 through which the moving case 120 penetrates, and when the moving motor 130 of the moving case linear moving device 131 is installed in the frame 140, the harmful insect extermination device 102, the harmful insect extermination device moving device 111, the moving case 120, the moving case linear moving device 131, the frame 140 can be integrally installed in the main body 2, and hereinafter, the harmful insect extermination module 100 includes the frame 140.

That is, the harmful insect extermination module 100 includes the harmful insect extermination device 102, the harmful insect extermination device moving device 111, the moving case 120, the moving case linear moving device 131, and the frame 140.

The harmful insect extermination device 102 is formed in a size smaller than space formed within the moving case 120.

The harmful insect extermination device 102 includes a rotation bracket 104 connected to a rotation axis of the rotation motor 110 and a speaker 106 installed in the rotation bracket 104 and for generating sound waves for exterminating harmful insects.

The harmful insect extermination device 102 is disposed to generate sound waves toward the lower side of the front of the harmful insect extermination module 100.

In the rotation bracket 104, an installation portion of the speaker 106 is disposed to be inclined toward the lower side of the front.

In the rotation bracket 104, a plurality of installation portions 105A and 105B in which the speaker 106 is installed are formed.

A plurality of speakers 106 are installed in different directions in the rotation bracket 104, and transmission directions of sound waves generated in a plurality of speakers 106A and 106B are different.

In the rotation bracket 104, one side installation portion 105A in which one 106A of the plurality of speakers 106A and 106B is installed and the other installation portion 105B in which the other one 106B of the plurality of speakers 106A and 106B is installed are not positioned at the same plane and are disposed to be inclined by a predetermined angle or are positioned at the opposite side of the rotation bracket 104.

That is, the plurality of speakers 106A and 106B each generate sound waves in a state disposed to be inclined or disposed in an opposition direction.

The plurality of speakers 106A and 106B can be installed to have a predetermined tilt angle in different propagation directions of a vertical direction and can be installed to have a predetermined tilt angle in different propagation directions of a lateral direction.

The harmful insect extermination device moving device 111 includes a rotation motor 110 in which a rotation axis 112 connected to the harmful insect extermination device 102 protrudes, and the harmful insect extermination device moving device 111 is installed in the moving case 120 to move together with the moving case 120 when the moving case 120 linearly moves.

The harmful insect extermination device moving device 111 can vertically rotate about a rotation axis in which the harmful insect extermination device 102 is horizontally disposed and can laterally rotate about a rotation axis in which the harmful insect extermination device 102 is vertically disposed and hereinafter, an example in which the harmful insect extermination device 102 rotates in a lateral direction is described in detail.

The rotation motor 110 is installed to position at the upper side of the moving case 120, and the rotation axis 112 is installed in a direction toward space of the moving case 120.

The rotation motor 110 is installed at the upper side of the moving case 120, and an upper surface of the moving case 120 is opened to house the harmful insect extermination device 102 in internal space of the moving case 120.

When the moving case 120 protrudes to the outside of the main body 2, the opening 122 is exposed to indoor, and when the moving case 120 is inserted into the main body 2, the opening 122 is formed at a position covered by the main body 2.

In the moving case 120, the rotation motor 110, which is the harmful insect extermination device moving device can be directly mounted in a fastening member such as a screw, and a motor bracket 124 in which the rotation motor 110 is installed can be provided.

The motor bracket 124 can integrally protrude from the moving case 120 and can be fastened by a fastening member such as a hook or a screw to the moving case 120.

The motor bracket 124 includes a rotation motor installation portion 125 in which the rotation motor 110 is provided and in which the rotation motor 110 is fastened by a fastening member 114 such as a hook or a screw, and a moving case coupling portion 126 bent to the lower side from the rotation motor installation portion 125 to be fastened by a fastening member 114 such as a hook or a screw to an upper part of the moving case 120.

The moving case linear moving device 131 includes a rack 128, a moving motor 130, and a pinion 134.

In order to linearly move the moving case 120, the rack 128 is provided in the moving case 120.

The rack 128 is provided in an upper direction at one side of the moving case 120 and can be extended in an upper direction at one side of a circumferential portion of the moving case 120, and the rack 128 can protrude in an upper direction by a hook or a fastening member at one side of a circumferential portion of the moving case 120 after being formed separately from the moving case 120.

When the pinion 134 rotates, the moving motor 130 rotates the pinion 134 so that the rack 128 performs a linear motion.

The moving motor 130 is directly fastened by a fastening member such as a screw to the main body 2 to be fixed to the main body 2 and is fastened by a fastening member 132 such as a screw to the frame 140 to be fixed to the main body 2 when the frame 140 is installed in the main body 2, and hereinafter, the moving motor 130 is fastened by a fastening member such as a screw to the frame 140.

In the moving motor 130, a rotation axis 129 is approximately horizontally installed so that the rack 128 may lift in a vertical direction.

The pinion 134 is installed in a rotation axis of the moving motor 130 and engages with the rack 128 to push up the rack 128 in an upper direction or to fall the rack 128 in a lower direction.

The center of the pinion 134 is connected to a rotation axis of the moving motor 130 and the edge of the pinion 134 is disposed to contact with the rack 128.

The frame 140 is installed in the main body 2 to guide a linear motion of the moving case 120, and in the frame 140, a penetration portion 142 for penetrating through the moving case 120 is formed.

In the frame 140, a moving motor fastening portion 144 for fastening the moving motor 130 by a fastening member 132 such as a screw is formed.

Operation of the present invention having the above-described configuration is described as follows.

First, when an air-conditioning operation such as a cooling operation, a heating operation, and a dehumidification operation is input through the manipulation unit 98, the controller 70 drives the wind adjustment member driving device 35 in an opening mode and drives the fan motor 52.

In an opening mode of the wind adjustment driving device 35, the wind adjustment member 34 opens the discharge port 6, and upon rotating the fan motor 52, the fan 54 rotates.

Upon rotating the fan 54, indoor air is inhaled into the main body 2 through the air inhalant port 4, is purified by the filter 80, and exchanges heat with the heat exchanger 60. Thereafter, air is guided to the wind adjustment member 34 and is discharged while passing through the air discharge port 6.

When the user inputs a harmful insect extermination mode together with or separately from an air-conditioning operation, the controller 70 controls the harmful insect extermination module 100 to generate sound waves toward indoor.

Hereinafter, the control of the harmful insect extermination module 100 is described in detail.

The controller 70 drives the moving motor 130 in a falling mode. The moving motor 130 rotates the pinion 134 in a falling mode and the pinion 134 falls the rack 128.

The moving case 120 falls together with the rack 128, and a portion thereof protrudes to the outside of the main body 2, particularly to the lower side while receiving guidance of the frame 140.

When the moving case 120 falls, the opening 122 formed in the moving case 120 is exposed to the outside of the main body 2, and the harmful insect extermination device 102 and the rotation motor 110 installed in the moving case 120 fall together with the moving case 120.

At least a portion of the harmful insect extermination device 102 is positioned lower than an external position of the main body 2, particularly a bottom portion of the main body 2 at an internal position of the main body 2.

In a falling mode of the moving motor 130 or after a falling mode of the moving motor 130 is complete, the controller 70 drives the rotation motor 110 in a rotation mode and applies power to the harmful insect extermination device 102 so that the harmful insect extermination device 102 generates sound waves of a specific frequency band.

The controller 70 drives the rotation motor 110 in forward and reverse directions in a rotation mode of the rotation motor 110, and the harmful insect extermination device 102 generates sound waves of a specific frequency band while rotating within the moving case 120 protruded to the lower side of the main body 2.

The harmful insect extermination device 102 widely propagates sound waves in a rotation direction thereof, and particularly sound waves generated in a plurality of speakers 106A and 106B are three-dimensionally propagated in a wide area of indoor.

The controller 70 can continue application of power of the harmful insect extermination device 102 and a rotation mode of the rotation motor 110, or intermit application of power of the harmful insect extermination device 102 and a rotation mode of the rotation motor 110 at a preset time interval, in a harmful insect extermination mode.

While the harmful insect extermination device 102 rotates and sound waves continuously generate, if the user inputs the stop of a harmful insect extermination mode through the manipulation unit 98 or the stop of the air conditioner, the controller 70 stops a rotation mode of the rotation motor 110 and intercepts power applied to the harmful insect extermination device 102. The controller 70 drives the moving motor 130 in a rising mode.

In a rising mode of the moving motor 130, the moving motor 130 rotates the pinion 134 in a direction opposite to a direction in a falling mode of the moving motor 130, and the pinion 134 raises the rack 128.

The moving case 120 rises together with the rack 128, and the entire moving case 120 is inserted into the main body 2 while receiving guidance of the frame 140.

When the moving case 120 rises, the opening 122 formed in the moving case 120 is covered by the main body 2 while positioning within the main body 2, and the rotation motor 110 and the harmful insect extermination device 102 installed in the moving case 120 rise together with the moving case 120.

As described above, upon rising, in a state where the entire harmful insect extermination device 102 is positioned within the main body 2, the harmful insect extermination device 102 is protected by the main body 2 and the moving case 120.

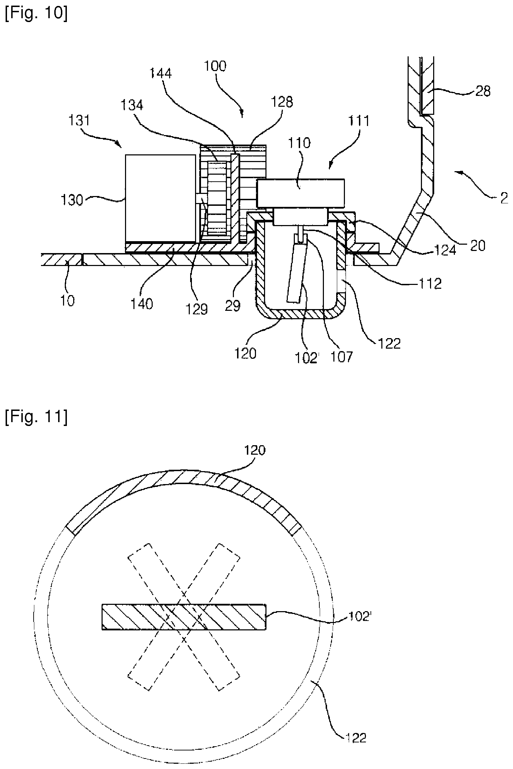

FIG. 10 is a longitudinal cross-sectional view of a major part of an air conditioner according to a second exemplary embodiment of the present invention, and FIG. 11 is a cross-sectional view of a major part of an air conditioner according to a second exemplary embodiment of the present invention.

In the air conditioner according to the present exemplary embodiment, as shown in FIGS. 10 and 11, a harmful insect extermination device is formed with a speaker 102' connected to a rotation axis 112 of the rotation motor 110.

In the air conditioner according to the present exemplary embodiment, the speaker 102' is not connected by a rotation bracket, as in a first exemplary embodiment of the present invention and the speaker 102' is directly connected to the rotation axis 112 of the rotation motor 110.

In the speaker 102', a rotation axis connection part 107 connected to the rotation axis 112 of the rotation motor 110 is formed.

In the rotation axis connection part 107, a connection groove for inserting and connecting the rotation axis 112 of the rotation motor 110 is formed.

In the rotation motor 110, which is the harmful insect extermination device moving device 111, the rotation axis 112 can be installed to be inclined by a predetermined angle and the rotation axis 112 can be vertically installed.

The speaker 102' which is a harmful insect extermination device is installed to generate sound waves in an inclination direction of the lower side of the front and when the rotation axis 112 is obliquely disposed, the speaker 102' is disposed in an extension direction of the rotation axis 112 and when the rotation axis 112 is vertically disposed, the speaker 102' is disposed to be inclined by a predetermined angle to an extension direction of the rotation axis 112.

In the air conditioner according to the present exemplary embodiment, upon rotating the rotation motor 110, which is the harmful insect extermination device moving device, the speaker 102'?generate sound waves while directly rotating about the rotation axis 112 and sound waves are propagated to indoor through the opening 122 of the moving case 120.

In the air conditioner according to the present exemplary embodiment, configurations other than a configuration in which the speaker 102' for generating sound waves is connected to a rotation axis of the rotation motor 100 by the rotation axis connection part 107 and operation thereof are identical to or similar to those of the air conditioner according to a first exemplary embodiment of the present invention and therefore a detailed description thereof will be omitted.

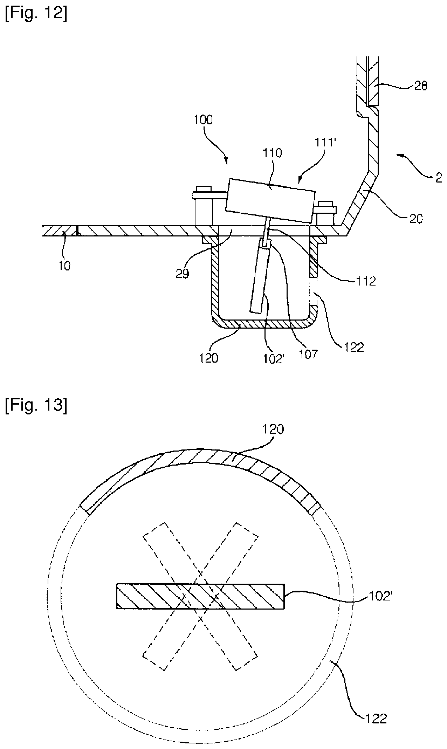

FIG. 12 is a longitudinal cross-sectional view of a major part of an air conditioner according to a third exemplary embodiment of the present invention, and FIG. 13 is a cross-sectional view of a major part of an air conditioner according to a third exemplary embodiment of the present invention.

In the air conditioner according to the present exemplary embodiment, a harmful insect extermination device moving device 110' includes a rotation motor 110' fixed to the main body 2, as shown in FIGS. 12 and 13.

The rotation motor 110' has a rotation axis 112 to which the harmful insect extermination device 102' is connected.

A fixing case 120' for rotatably housing the harmful insect extermination device 102' is fixed to the inside of the main body 2.

In the fixing case 120', an opening 122 for passing through sound waves generated in the harmful insect extermination device 102' is formed.

The harmful insect extermination device 102' can be formed with a rotation bracket and a speaker, as in the first exemplary embodiment of the present invention and can be formed with a speaker, as in the second exemplary embodiment of the present invention.

The harmful insect extermination device 102' generates sound waves in a rotation direction while rotating in a state housed in the fixing case 120'.

The rotation motor 110' is fastened by a fastening member such as a hook or a screw to the main body 2 to position within the main body 2.

The rotation axis 112 is installed to protrude to the inside of the fixing case 120' by penetrating a penetration hole 29 formed in the main body 2.

The fixing case 120 is fastened by a fastening member such as a hook or a screw to the main body 2 to protrude to the outside of the main body 2.

The fixing case 120' covers the penetration hole 29 formed in the main body 2, and an opening surface is formed in a surface toward the main body 2.

In the fixing case 120', the opening 122 is formed long in a rotation direction of the harmful insect extermination device 102'.

In the air conditioner according to the present exemplary embodiment, upon driving of the rotation motor 110' which is the harmful insect extermination device moving device 111', the harmful insect extermination device 102' generates sound waves while rotating within the fixing case 120' and the generated sound waves pass through an opening 122 of the fixing case 120' and are propagated to indoor. In this case, the fixing case 120' protects the harmful insect extermination device 102'.

In the air conditioner according to the present exemplary embodiment, configurations other than a configuration in which the rotation motor 110', which is the harmful insect extermination device moving device 111' is fixed to the main body 2 and the harmful insect extermination device 102' generate sound waves while rotating within the fixing case 120' installed to protrude to the outside of the main body 2 and operation thereof are identical to or similar to those of the air conditioner according to the first exemplary embodiment or the second exemplary embodiment of the present invention, constituent elements identical to or corresponding to those of the air conditioner according to the first exemplary embodiment or the second exemplary embodiment are denoted by the same reference numerals, and therefore a detailed description thereof will be omitted.

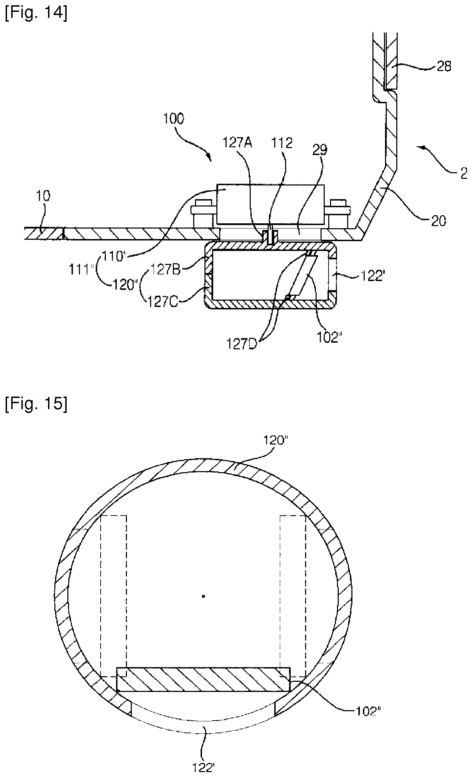

FIG. 14 is a longitudinal cross-sectional view of a major part of an air conditioner according to a fourth exemplary embodiment of the present invention, and FIG. 15 is a cross-sectional view of a major part of an air conditioner according to a fourth exemplary embodiment of the present invention.

In the air conditioner according to the present exemplary embodiment, a harmful insect extermination device moving device 111" includes a rotation motor 110" and a rotation case 120".

The rotation motor 110" is fixed to the main body 2 and a rotation axis 112 protrudes.

The rotation case 120" is connected to the rotation axis 112' and the harmful insect extermination device 102" is fixed to the inside of the rotation case 120".

The rotation case 120" has an opening 122' for passing through sound waves generated in the harmful insect extermination device 102".

The harmful insect extermination device 102" can be formed with a rotation bracket and a speaker, as in the first exemplary embodiment of the present invention and can be formed with a speaker, as in the second exemplary embodiment of the present invention.

The harmful insect extermination device 102" rotates together with the rotation case 120?upon rotating the rotation case 120" in a fixed state while being housed within the rotation case 120".

The rotation motor 110" is fastened by a fastening member such as a hook or a screw to the main body 2 to position within the main body 2, as in the third exemplary embodiment of the present invention.

The rotation axis 112 protrudes toward the rotation case 120 by penetrating a penetration hole 29 formed in the main body 2.

The rotation case 120" is connected to the rotation axis 112 to protrude to the outside of the main body 2.

In the rotation case 120", a rotation axis connection portion 127A to which the rotation axis 112 is connected is formed in a hole shape or a boss shape in a surface opposite to the main body 2.

In the rotation case 120", in order to cover the penetration hole 29 formed in the main body 2, a surface opposite to the main body 2 is formed larger than the penetration hole 29.

Unlike the first exemplary embodiment to the third exemplary embodiment of the present invention, in the rotation case 120" in a state where the harmful insect extermination device 102"?is integrally formed with the rotation case 120", because the harmful insect extermination device 102" rotates together with the rotation case 120", it is unnecessary that the opening 122' is formed long in a rotation direction of the harmful insect extermination device 102", and the opening 122' is formed in a portion opposite to the harmful insect extermination device 102".

In order to install the harmful insect extermination device 102" within the rotation case 120", the rotation case 120" is formed with a coupling body of a plurality of members 127B and 127C, and at least one of harmful insect extermination device coupling units 127D for supporting/fixing the harmful insect extermination device 102" is formed within the rotation case 120".

In the air conditioner according to the present exemplary embodiment, upon driving the rotation motor 110, which is the harmful insect extermination device moving device 111", the harmful insect extermination device 102" generates sound waves while rotating together with the rotation case 120", and the generated sound waves are propagated to indoor after passing through the opening 122' of the rotation case 120". In this case, the rotation case 120" protects the harmful insect extermination device 102".

In the air conditioner according to the present exemplary embodiment, configurations other than a configuration in which the harmful insect extermination device 102" rotates together with the rotation case 120" installed to protrude to the outside of the main body 2 and operation thereof are identical to or similar to those of the first exemplary embodiment to the third exemplary embodiment according to the present invention, constituent elements identical to or corresponding to those of the air conditioner according to the first exemplary embodiment to the third exemplary embodiment are denoted by the same reference numerals, and therefore a detailed description thereof will be omitted.

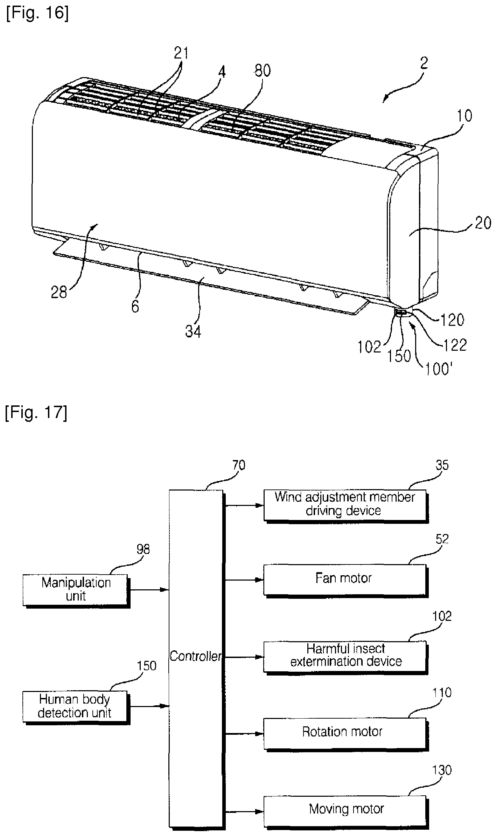

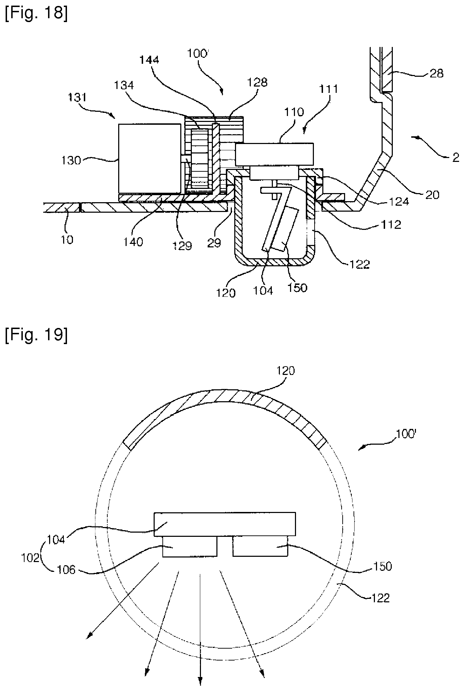

FIG. 16 is a perspective view illustrating an operating air conditioner according to a fifth exemplary embodiment of the present invention, FIG. 17 is a block diagram illustrating a control process of an air conditioner according to a fifth exemplary embodiment of the present invention, FIG. 18 is a longitudinal cross-sectional view of an air conditioner when a harmful insect extermination module shown in FIG. 16 protrudes to the outside of a main body, and FIG. 19 is a cross-sectional view of a harmful insect extermination module shown in FIG. 16.

The air conditioner according to the present exemplary embodiment includes a human body detection unit 150 for detecting a human body and configurations other than the human body detection unit 150 and operation thereof are identical to or similar to those of the first exemplary embodiment according to the present invention, constituent elements identical to or corresponding to those of the air conditioner according to the first exemplary embodiment to the first exemplary embodiment are denoted by the same reference numerals, and therefore a detailed description thereof will be omitted.

The human body detection unit 150 is formed with a kind of human body detection sensor that can detect a human body, such as a camera, an image sensor, or an infrared ray sensor.

The human body detection unit 150 can detect a human body and a position thereof while moving together with the harmful insect extermination device 102 and can detect a human body and a position thereof while separately moving from the harmful insect extermination device 102.

Hereinafter, upon driving the harmful insect extermination device moving device 111, the human body detection unit 150 is installed to move together with the harmful insect extermination device 102, and the human body detection unit 150 and the harmful insect extermination device 102 form a harmful insect extermination module 100'.

The harmful insect extermination module 100' includes a harmful insect extermination device moving device 111, a moving case 120, and a moving case linear moving device 131.

The harmful insect extermination device moving device 111 moves the harmful insect extermination device 102 to generate sound waves in a direction toward a human body detected by the human body detection unit 150.

The harmful insect extermination device moving device 111 is formed in a structure for moving both the human body detection unit 150 and the harmful insect extermination device 102, and one 102 of the human body detection unit 150 and the harmful insect extermination device 102 is connected to the harmful insect extermination device moving device 111 and the other one 150 thereof can be installed in the one 102 thereof.

That is, in the harmful insect extermination module 100', the human body detection unit 150 is connected to the harmful insect extermination device moving device 111 and the harmful insect extermination device 102 is installed in the human body detection unit 150 and thus when the harmful insect extermination device moving device 111 moves the human body detection unit 150, the harmful insect extermination device 102 can move along the human body detection unit 150.

Further, in the harmful insect extermination module 100', the harmful insect extermination device 102 is connected to the harmful insect extermination device moving device 111 and the human body detection unit 150 is installed in the harmful insect extermination device 102 and thus when the harmful insect extermination device moving device 111 moves the harmful insect extermination device 102, the human body detection unit 150 can move along the harmful insect extermination device 102.

Hereinafter, the harmful insect extermination device 102 is connected to the harmful insect extermination device moving device 111, and the human body detection unit 150 is installed in the harmful insect extermination device 102.

The moving case 120 rotatably houses the harmful insect extermination device 102 and the human body detection unit 150.

In the moving case 120, an opening 122 for receiving and transmitting a signal for detecting a human body and sound waves generated in the harmful insect extermination device 102 is formed, and the opening 122 is formed long in a rotation direction of the harmful insect extermination device 100 and the human body detection unit 90.

In the air conditioner according to the present exemplary embodiment, the harmful insect extermination device moving device 111 and the moving case linear moving device 131 are identical to or similar to those of the first exemplary embodiment according to the present invention, constituent elements identical to or corresponding to those of the air conditioner according to the first exemplary embodiment or the second exemplary embodiment are denoted by the same reference numerals, and therefore a detailed description thereof will be omitted.

The air conditioner according to the present exemplary embodiment includes a controller 70, as in the first exemplary embodiment, and the controller 70 drives the harmful insect extermination device moving device 111 and the moving case linear moving device 131 so that the human body detection unit 150 scans indoor, and if the human body detection unit 150 detects a human body while driving the harmful insect extermination device moving device 111, when a sound wave generating direction of the harmful insect extermination device 102 faces a human body detected by the human body detection unit 150, the controller 70 stops the harmful insect extermination device moving device 111.

The harmful insect extermination device 102 and the human body detection unit 150 are formed in a size smaller than internal space of the moving case 120 and are installed to separate from each other in a lateral direction or a vertical direction.

In a case where the harmful insect extermination device 102 and the human body detection unit 150 are disposed to separate from each other in a lateral direction, when the human body detection unit 150 detects a human body, in order to move the harmful insect extermination device 102 in a direction toward a human body, the harmful insect extermination device moving device 111 adjusts a position thereof while additionally rotating a rotation bracket 104, and in a case where the harmful insect extermination device 102 and the human body detection unit 150 are disposed to separate from each other in a vertical direction, when the human body detection unit 150 detects a human body, in order to stop at a position thereof without necessary to additionally rotate the harmful insect extermination device 102, the harmful insect extermination device moving device 111 immediately stops the rotation bracket 104.

In the harmful insect extermination module 100', if a plurality of human body detection units 150 are installed in the rotation bracket 104, a human body can be more quickly and accurately detected, and if a plurality of harmful insect extermination devices 102 are installed in the rotation bracket 104, sound waves in which harmful insects evade can be generated in a wider area, and it is more preferable that the harmful insect extermination module 100' includes a plurality of human body detection units 150 and a plurality of harmful insect extermination devices 102.

When the harmful insect extermination module 100' includes a plurality of human body detection units 150 and a plurality of harmful insect extermination devices 102, the plurality of human body detection units 150 are installed to have a predetermined tilt angle in different human body detecting directions, and the plurality of harmful insect extermination devices 102 are installed to have a predetermined tilt angle in different sound wave propagation directions.

When one of the plurality of human body detection units 150 is installed at a relatively high position at indoor to detect a high area of indoor and the other one is installed at a relatively low position to detect a low area of indoor, entire indoor can be uniformly detected.

When one of the plurality of harmful insect extermination devices 102 is installed at a relatively high position at indoor to generate sound waves toward a high area of indoor and the other one is installed at a relatively low position to generate sound waves toward a low area of indoor, sound waves can be generated in an entire area of indoor.

Here, upon detecting a human body, only the singular of a plurality of harmful insect extermination devices 102 can be operated and a plurality of harmful insect extermination devices 102 can be operated together.

The harmful insect extermination module 100' is disposed to generate sound waves toward the lower side of the front thereof, and a portion of the rotation bracket 104, particularly a portion in which the human body detection unit 150 and the harmful insect extermination device 102 are installed is disposed to be inclined toward the lower side of the front.

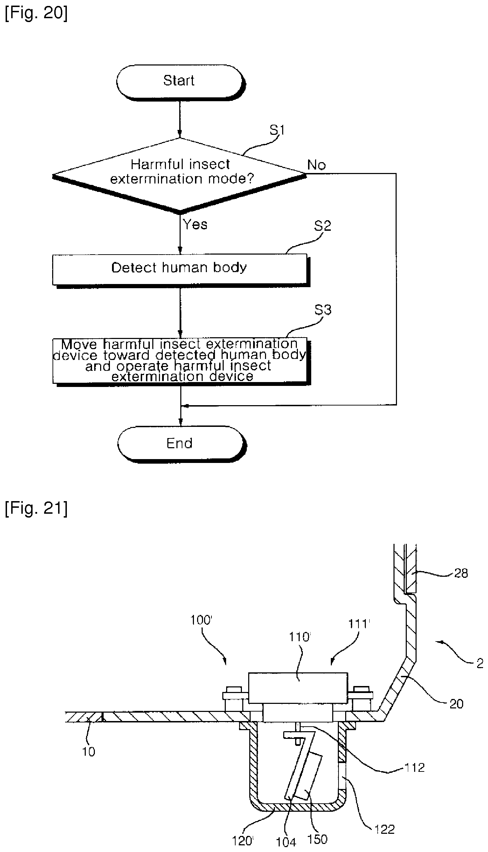

FIG. 20 is a flowchart illustrating a method of operating an air conditioner according to another exemplary embodiment of the present invention.

The method of operating an air conditioner according to the present exemplary embodiment includes steps S1 and S2 of detecting a position of a human body and step S3 of operating a harmful insect extermination device.

Steps S1 and S2 of detecting a position of a human body are steps in which the human body detection unit 150 detects a position of a human body, and at steps S1 and S2, both the human body detection unit 150 and the harmful insect extermination device 102 are moved.

At steps S1 and S2 of detecting a position of a human body, if a position of a human body is detected, at step S3 of operating a harmful insect extermination device, the harmful insect extermination device 102 is operated while being moved to face a position of a human body detected by the human body detection unit 150.

At step S3 of operating a harmful insect extermination device, when the harmful insect extermination device 102 faces a position of a human body detected by the human body detection unit 150, moving of the human body detection unit 150 and the harmful insect extermination device 102 is stopped.

Hereinafter, steps S1 and S2 of detecting a position of a human body and step S3 of operating a harmful insect extermination device are described in detail.

If a harmful insect extermination mode is input through the manipulation unit 98 and the air conditioner is operated in a single harmful insect extermination mode, the controller 70 does not drive the fan motor 52 of the ventilator 50 and the wind adjustment member driving device 35 and controls the harmful insect extermination module 100', and in this case, the harmful insect extermination module 100' is driven in a human body detection/harmful insect extermination mode.

The controller 70 controls a mode of the moving case moving device 131 to a fall mode so that the moving case 120 falls to the lower side, which is the outside of the main body 2 in a human body detection/harmful insect extermination mode of the harmful insect extermination module 100', if the moving case 120 falls, the controller 70 drives the harmful insect extermination device moving device 111 in a rotation mode so that the human body detection unit 150 scans indoor (S1)(S2).

When the human body detection unit 150 detects a human body in a human body detection/harmful insect extermination mode, the controller 70 controls the harmful insect extermination device moving device 111 so that a sound wave generating direction of the harmful insect extermination device 102 facing a human body faces a human body detected by the human body detection unit 150 (S3).

That is, when only a harmful insect extermination mode is input through the manipulation unit 98, the controller 70 drives the harmful insect extermination device moving device 111 so that the human body detection unit 150 scans indoor and while driving the harmful insect extermination device moving device 111, if the human body detection unit 150 detects a human body, when a sound wave generating direction of the harmful insect extermination device 102 faces a human body detected by the human body detection unit 150, the harmful insect extermination device moving device 111 is stopped.

If a harmful insect extermination mode is not input through the manipulation unit 98 and the air conditioner is operated in a single air-conditioning operation, the controller 70 controls the fan motor 52 of the ventilator 50, the wind adjustment member driving device 35, the harmful insect extermination module 100, drives the fan motor 52 of the ventilator 50, and drives the harmful insect extermination module 100' in a human body detecting mode.

The controller 70 controls a mode of the moving case position moving device 131 to a falling mode so that that the moving case 120 falls to the lower side, which is the outside of the main body 2 in a human body detecting mode of the harmful insect extermination module 100', and if the moving case 120 falls, the controller 70 drives the harmful insect extermination device moving device 111 in a rotation mode so that the human body detection unit 150 scans indoor.

When the human body detection unit 150 detects a human body in a human body detection mode, the controller 70 drives the wind adjustment member driving device 35 in a human body detecting mode, and the wind adjustment member 34 guides discharge of air in a direction in which a human body is positioned.

Further, when an air-conditioning operation is input and a harmful insect extermination mode is input through the manipulation unit 90, the controller 70 controls the fan motor 52 of the ventilator 50, the wind adjustment member driving device 35, and the harmful insect extermination module 100' drives the fan motor 52 of the ventilator 50, and drives the harmful insect extermination module 100' in a human body detection/harmful insect extermination mode, as in the single harmful insect extermination mode.

The controller 70 controls a mode of the moving case position moving device 131 to a fall mode so that the moving case 120 falls to the lower side, which is the outside of the main body 2 in a human body detection/harmful insect extermination mode, and when the moving case 120 falls, the controller 70 drives the harmful insect extermination device moving device 111 in a rotation mode so that the human body detection unit 150 scans indoor, when the human body detection unit 150 detects human body, the controller 70 controls the harmful insect extermination device moving device 111 so that a sound wave generating direction of the harmful insect extermination device 102 faces a human body detected by the human body detection unit 150.

As in a single air-conditioning operation, the controller 70 drives the wind adjustment member driving device 35 in a human body detection mode, and the wind adjustment member 34 guides to discharge air in a direction in which a human body is positioned.

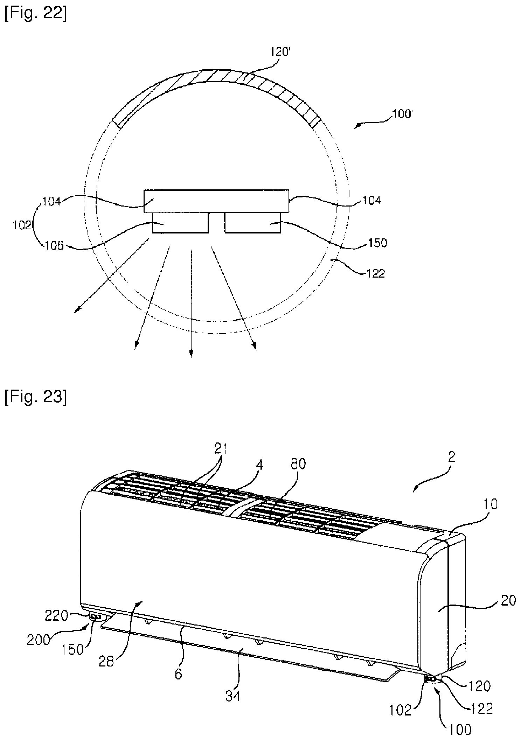

FIG. 21 is a longitudinal cross-sectional view of a major part of an air conditioner according to a sixth exemplary embodiment of the present invention, and FIG. 22 is a cross-sectional view of a major part of an air conditioner according to a sixth exemplary embodiment of the present invention.

In the air conditioner according to the present exemplary embodiment, the harmful insect extermination module 100' includes a harmful insect extermination device 102 and a human body detection unit 150, and the harmful insect extermination device moving device 111' is installed in the main body 2, and a fixing case 120' is fixed to the main body 2, as shown in FIGS. 21 and 22.

In the present exemplary embodiment, configurations other than the harmful insect extermination device moving device 111' and the fixing case 120' and operation thereof are identical to or similar to those of the fifth exemplary embodiment according to the present invention, constituent elements identical to or corresponding to those of the air conditioner according to the fifth exemplary embodiment are denoted by the same reference numerals, and therefore a detailed description thereof will be omitted.

The harmful insect extermination device moving device 111' is fixed to the main body 2 and includes a rotation motor 110' having a rotation axis 112 to which a rotation bracket 104 is connected.

The rotation motor 110' is positioned within the main body 2 and is fastened by a fastening member such as a hook or a screw to the main body 2.

The fixing case 120' rotatably houses the human body detection unit 150 and the harmful insect extermination device 102, as in the fifth exemplary embodiment of the present invention, and an opening is formed in a surface facing the main body 2 while covering the penetration hole 29 formed in the main body 2.

In the fixing case 120', the opening 122 is long formed in a rotation direction of the human body detection unit 90 and the harmful insect extermination device 102.

The fixing case 120' is fastened by a fastening member such as a hook or a screw to the main body 2 so as to protrude to the outside of the main body 2.

In the air conditioner according to the present exemplary embodiment, when driving a rotation motor 110' which is a harmful insect extermination device moving device 111' the harmful insect extermination device 102 generates sound waves while rotating within the fixing case 120', and the generated sound waves are propagated to indoor while passing through the opening 122 of the fixing case 120', the human body detection unit 150 detects a human body while rotating in a state housed in the fixing case 120' and in this case, the fixing case 120' protects the human body detection unit 150 and the harmful insect extermination device 102.

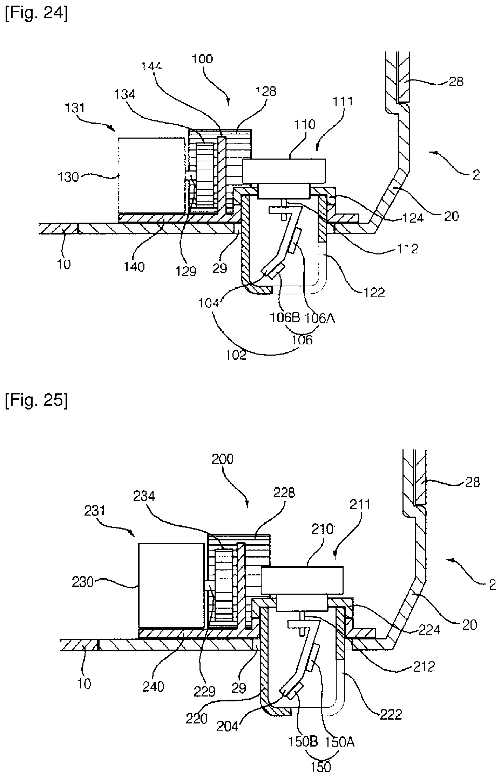

FIG. 23 is a perspective view illustrating an operating air conditioner according to a seventh exemplary embodiment of the present invention, FIG. 24 is a longitudinal cross-sectional view of a human body detection module shown in FIG. 23, and FIG. 25 is a longitudinal cross-sectional view of a harmful insect extermination module shown in FIG. 23.

The air conditioner according to the present exemplary embodiment includes a harmful insect extermination module 100 and a human body detection module 200, as shown in FIGS. 23 and 24.

The harmful insect extermination module 100 is disposed to separate from the human body detection module 200. When the human body detection module 200 is disposed at one side of the main body 2, the harmful insect extermination module 100 is disposed at the other side of the main body 2, and the harmful insect extermination module 100 and the human body detection module 200 operate in a separated state.

The harmful insect extermination module 100 does not include a human body detection unit 150 and includes a harmful insect extermination device 102, a harmful insect extermination device moving device 111, a moving case 120, a moving case linear moving device 131, and a frame 140.

In the harmful insect extermination module 100, detailed configurations of each of the harmful insect extermination device 102, the harmful insect extermination device moving device 111, the moving case 120, the moving case linear moving device 131, and the frame 140 are identical to or similar to those of the harmful insect extermination module 100 according to the first exemplary embodiment of the present invention and therefore a detailed description thereof will be omitted.

In the harmful insect extermination module 100, a plurality of speakers 106 are installed in a rotation bracket 104.

The plurality of speakers 106 are installed in the rotation bracket 104 in different directions and are installed so that a transmission direction of sound waves generated in a plurality of speakers 106A and 106B have different predetermined tilt angles.

In the human body detection module 200, the human body detection unit 150 detects a position of a human body while moving, and the human body detection module 200 is identical to or similar to the harmful insect extermination module 100 in configurations other than the harmful insect extermination device 102.

In the human body detection module 200, the human body detection unit 150 is installed instead of the harmful insect extermination device 102 of the harmful insect extermination module 100, and the human body detection module 200 includes a rotation bracket 204, a human body detection unit moving device 211, a moving case 220, and a moving case linear moving device 231, and a frame 240.

The human body detection unit 150 according to the present exemplary embodiment has the same configuration as that of the fifth exemplary embodiment of the present invention and therefore a detailed description thereof will be omitted.

The rotation bracket 204 is rotatably housed within the moving case 220.

In the human body detection module 200, a plurality of human body detection units 150A and 150B are installed in the rotation bracket 204.

The plurality of human body detection units 150A and 150B are installed to have predetermined tilt angles in different human body detection directions.

The human body detection unit moving device 211 includes a rotation motor 210 installed in the moving case 220.

The rotation motor 210 is installed in the moving case 220 by the motor bracket 224 and has a rotation axis 212 connected to the rotation bracket 204.

The moving case 220 has space for housing the rotation bracket 204 and the human body detection unit 150.

In the human body detection module 200, when the human body detection unit 150 is an infrared ray sensor, the moving case 220 is made of an infrared ray transmission material for transmitting infrared rays, and when the human body detection unit 150 is not an infrared ray sensor, an opening 222 is long formed in the moving case 220 in a rotation direction of the human body detection unit 150.

A moving case linear moving device 231 includes a rack 228 provided in the moving case 220 in order to linearly move the moving case 220, a moving motor 230 for generating a driving force for linearly moving the moving case 220, and a pinion 234 installed in a rotation axis 229 of the moving motor 230 and engaged with the rack 228 to linear move the rack 228 upon driving the moving motor 230.

The moving motor 230 is fastened to the frame 240 by a fastening member such as a screw.

The frame 240 is installed in the main body 2 to guide a linear motion of the moving case 220.

That is, in the human body detection module 200, the human body detection unit 150 is installed in the rotation bracket 204, the rotation bracket 204 is connected to the human body detection unit moving device 211 to rotate, the human body detection unit moving device 211 is installed in the moving case 220, and the moving case 220 is connected to the moving case linear moving device 211 to linearly move.

In the main body 2, one side penetration hole 29 for penetrating the moving case 120 of the harmful insect extermination module 100 is formed, and the other side penetration hole 29' for penetrating the moving case 220 of the human body detection module 200 is formed.

When the air conditioner according to the present exemplary embodiment performs a single air-conditioning operation, the harmful insect extermination module 100 does not operate, and the human body detection module 200 detects a human body by performing operation and the wind adjustment member driving device 35 is driven to adjust the wind to a position of the detected human body.

Further, when the air conditioner according to the present exemplary embodiment operates in a single harmful insect extermination mode, if a harmful insect extermination mode is input, the human body detection module 200 is operated to detect a human body, and the harmful insect extermination module 100 operates to generate sound waves in which harmful insects such as mosquitoes evade at a position of the detected human body.

When the air conditioner according to the present exemplary embodiment is in a harmful insect extermination mode while performing an air-conditioning operation, the human body detection module 200 operates to detect a human body and the harmful insect extermination module 100 operates to generate sound waves in which harmful insects such as mosquitoes evades at a position of the detected human body, the wind adjustment member driving device 35 is driven to adjust the wind to a position of the detected human body.

The controller 70 drives the human body detection unit moving device 211 of the human body detection module 200 so that the human body detection unit 150 scans indoor in a harmful insect extermination mode and when the human body detection unit 150 detects a human body while driving the human body detection unit moving device 211, the harmful insect extermination device 102 drives the harmful insect extermination device moving device 111 of the harmful insect extermination module 100 toward a human body detected by the human body detection unit 150, and when the harmful insect extermination device 102 faces a position toward a human body detected by the human body detection unit 150, the harmful insect extermination device moving device 111 of the harmful insect extermination module 100 is stopped.

Because the harmful insect extermination device according to the present invention can exterminate harmful insects in a wide area of indoor while moving, high harmful insect extermination performance is obtained.

The embodiment of the invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

### [Industrial Applicability]

According to the present invention having the above-described configuration, because the harmful insect extermination device generate sound waves toward a wide area of indoor while being moved by the harmful insect extermination device moving device, an area where harmful insects can be exterminated at indoor can be more enlarged and a harmful insect extermination ability can be improved with a minimum harmful insect extermination device.

Further, because the moving case protrudes to the outside of the main body and the harmful insect extermination device generates sound waves in a state where a position thereof is moved together with the moving case, when the harmful insect extermination device generate sound waves at an internal position of the main body, harmful insects of indoor can be more effectively exterminated.

Further, because the harmful insect extermination device is protected by the moving case, damage of the harmful insect extermination device can be minimized.

Further, because the moving case is inserted into the main body, damage of the moving case can be prevented.

Further, because the opening of the moving case is formed long in a rotation direction of the harmful insect extermination device, the moving case does not disturb transmission of sound waves generated in the harmful insect extermination device.

Further, because the harmful insect extermination device moving device is formed with a rotation motor installed in a moving case to rotate the harmful insect extermination device, when the moving case lineally moves, the rotation motor and the harmful insect extermination device move together with the moving case and thus the harmful insect extermination device can rotate and linearly move with a simple structure.

Further, because the rack, the pinion, and the moving motor linearly move the moving case, the moving case can linearly move with a simple structure.

Further, because the harmful insect extermination device moving device is formed with a rotation motor in which the harmful insect extermination device is connected and the harmful insect extermination device generates sound waves while rotating within the fixing case, the harmful insect extermination device moving device can protect while rotating the harmful insect extermination device with a simple structure.

Further, because the harmful insect extermination device moving device is formed with a rotation motor in which the rotation case is connected and the harmful insect extermination device generates sound waves while rotating together with the rotation case upon rotating the rotation case, a length of an opening formed in the rotation case can be minimized and damage of the harmful insect extermination device due to injection of a foreign substance can be minimized.

Further, as the harmful insect extermination device is disposed to generate sound waves toward a lower side of the front of the harmful insect extermination module, the harmful insect extermination device can exterminate harmful insects around a human body positioned at a lower part of indoor from the human body and thus harmful insects can be more effectively exterminated.

Further, because sound waves generated in the harmful insect extermination device are propagated toward a position of a human body detected by the human body detection unit, harmful insects of an indoor area in which the human body is positioned can be effectively exterminated, and when the human body moves a position at indoor, the harmful insect extermination device can exterminate harmful insects around the human body while moving along the human body.

Further, because one harmful insect extermination device moving device moves both a human body detection unit and a harmful insect extermination device, the air conditioner can be formed with a simple structure and a cheap cost.

## Claims

1. An air conditioner comprising:
a main body (2) in which an air inhalant port (4) and an air discharge port (6) are formed to discharge air after inhaling air and performing air-conditioning; and
a harmful insect extermination module (100) disposed at the main body (2) to exterminate harmful insects of indoor,
wherein the harmful insect extermination module (100) comprises:
a harmful insect extermination device (102) for exterminating harmful insects; and
a harmful insect extermination device moving device (111) for moving the harmful insect extermination device in order to exterminate harmful insects while moving the harmful insect extermination device,
**characterized in that** the harmful insect extermination module (100) further comprises:
a moving case (120) for rotatably housing the harmful insect extermination device (102); and
a moving case linear moving device (110) for linearly moving the moving case (120) to insert into the main body (2) or to protrude to the outside of the main body (2).

2. The air conditioner of claim 1, wherein the main body (2) has a penetrating hole (29) for penetrating the moving case (120) in a bottom surface so that the moving case (120) moves downward to protrude to the lower side of the main body (2) or moves upward to the inside of the main body (2).

3. The air conditioner of claim 1, wherein the harmful insect extermination device (102) comprises a speaker (106) for generating sound waves for exterminating the harmful insects, and
in the moving case (120), an opening (122) for passing through sound waves generated in the harmful insect extermination device (102) is formed long in a rotation direction of the harmful insect extermination device (102).

4. The air conditioner of claim 1, wherein the moving case linear moving device (131) comprises:
a rack (128) provided in the moving case;
a moving pinion (134) engaged with the rack; and
a moving motor (130) for rotating the pinion (134) so that the rack (128) performs a linear motion when the pinion (134) rotates.

5. The air conditioner of claim 1, wherein the harmful insect extermination device (111) moving device comprises a rotation motor (110) disposed to protrude a rotation axis connected to the harmful insect extermination device (112).

6. The air conditioner of claim 5, wherein the harmful insect extermination device (102) comprises:
a rotation bracket (104) connected to a rotation axis of the rotation motor (110); and
a speaker (106) installed in the rotation bracket (104) to generate sound waves for exterminating the harmful insects.

7. The air conditioner of claim 1, wherein the harmful insect extermination device is disposed to generate sound waves toward the lower side of the front of the harmful insect extermination module (100).

8. The air conditioner of claim 1, wherein the air conditioner further comprises a human body detection unit (150) for detecting a human body of indoor in which the main body (2) is installed, and
wherein the harmful insect extermination device moving device (111) moves the harmful insect extermination device (102) in a direction toward a human body detected by the human body detection unit (150).

9. The air conditioner of claim 8, wherein the human body detection unit (150) is installed to move together with the harmful insect extermination device (102).

10. The air conditioner of claim 9, further comprising a controller (70) for driving the harmful insect extermination device moving device (111) so that the human body detection unit (150) scans indoor, and for stopping, when the human body detection unit (150) detects a human body while driving the harmful insect extermination device moving device (111), if the harmful insect extermination device (102) faces a human body detected by the human body detection unit (150), the harmful insect extermination device moving device (111).

11. The air conditioner of claim 10, wherein one of the human body detection unit (150) and the harmful insect extermination device (102) is connected to the harmful insect extermination device moving device (111) and the other one thereof is connected to the one thereof.

## Patentansprüche

1. Klimaanlage, die aufweist:
einen Hauptkörper (2), in dem eine Lufteinsaugöffnung (4) und eine Luftabgabeöffnung (6) ausgebildet sind, um Luft abzugeben, nachdem die Luft eingesaugt wurde und die Klimatisierung durchgeführt wurde; und
ein Schadinsekten-Vernichtungsmodul (100), das an dem Hauptkörper (2) angeordnet ist, um schädliche Insekten im Innenraum zu vernichten,
wobei das Schadinsekten-Vernichtungsmodul (100) aufweist:
eine Schadinsekten-Vernichtungsvorrichtung (102) zum Vernichten schädlicher Insekten; und
eine Schadinsekten-Vernichtungsvorrichtungs-Bewegungsvorrichtung (111) zum Bewegen der Schadinsekten-Vernichtungsvorrichtung, um schädliche Insekten zu vernichten, während die Schadinsekten-Vernichtungsvorrichtung bewegt wird,
**dadurch gekennzeichnet, dass** das Schadinsekten-Vernichtungsmodul (100) ferner aufweist:
ein sich bewegendes Gehäuse (120) zum drehbaren Aufnehmen der Schadinsekten-Vernichtungsvorrichtung (102); und
eine lineare Bewegungsvorrichtung (110) für das sich bewegende Gehäuse zum linearen Bewegen des sich bewegenden Gehäuses (120), um es in den Hauptkörper (2) einzusetzen oder nach außerhalb des Hauptkörpers (2) vorstehen zu lassen.

2. Klimaanlage nach Anspruch 1, wobei der Hauptkörper (2) ein Durchdringungsloch (29) hat, um das sich bewegende Gehäuse (120) in einer unteren Oberfläche zu durchdringen, so dass das sich bewegende Gehäuse (120) sich nach unten bewegt, so dass es zu der Unterseite des Hauptkörpers (2) vorsteht oder sich zum Inneren des Hauptkörpers (2) bewegt.

3. Klimaanlage nach Anspruch 1, wobei die Schadinsekten-Vernichtungsvorrichtung (102) einen Lautsprecher (106) zum Erzeugen von Schallwellen aufweist, um die schädlichen Insekten zu vernichten, und
wobei in dem sich bewegenden Gehäuse (120) eine Öffnung (122) zum Durchlassen der in der Schadinsekten-Vernichtungsvorrichtung (102) erzeugten Schallwellen in einer Drehrichtung der Schadinsekten-Vernichtungsvorrichtung (102) ausgebildet ist.

4. Klimaanlage nach Anspruch 1, wobei die lineare Bewegungsvorrichtung (131) für das sich bewegende Gehäuse aufweist:
eine Zahnstange (128), die in dem sich bewegenden Gehäuse bereitgestellt ist;
ein sich bewegendes Ritzel (134), das mit der Zahnstange in Eingriff ist; und
einen Bewegungsmotor (130) zum Drehen des Ritzels (134), so dass die Zahnstange (128) eine lineare Bewegung durchführt, wenn sich das Ritzel (134) dreht.

5. Klimaanlage nach Anspruch 1, wobei die Schadinsekten-Vernichtungsvorrichtungs-Bewegungsvorrichtung (111) einen Drehmotor (110) aufweist, der derart angeordnet ist, dass er über eine mit der Schadinsekten-Vernichtungsvorrichtung (112) verbundene Drehachse vorsteht.

6. Klimaanlage nach Anspruch 5, wobei die Schadinsekten-Vernichtungsvorrichtung (102) aufweist:
eine Drehklammer (114), die mit einer Drehachse des Drehmotors (110) verbunden ist; und
einen Lautsprecher (106), der in der Drehklammer (104) installiert ist, um Schallwellen zum Vernichten der schädlichen Insekten zu erzeugen.

7. Klimaanlage nach Anspruch 1, wobei die Schadinsekten-Vernichtungsvorrichtung angeordnet ist, um Schallwellen in Richtung der Vorderseite des Schadinsekten-Vernichtungsmoduls (100) zu erzeugen.

8. Klimaanlage nach Anspruch 1, wobei die Klimaanlage ferner eine Erkennungseinheit (150) für menschliche Körper aufweist, um einen menschlichen Körper in dem Innenraum, in dem der Hauptkörper (2) installiert ist, zu erkennen, und
wobei die Schadinsekten-Vernichtungsvorrichtungs-Bewegungsvorrichtung (111) die Schadinsekten-Vernichtungsvorrichtung (102) in eine Richtung auf einen von der Erkennungseinheit (150) für menschliche Körper erkannten menschlichen Körper zu bewegt.

9. Klimaanlage nach Anspruch 8, wobei die Erkennungseinheit (150) für menschliche Körper derart installiert ist, dass sie sich zusammen mit der Schadinsekten-Vernichtungsvorrichtung (102) bewegt.

10. Klimaanlage nach Anspruch 9, die ferner eine Steuerung (70) zum Antreiben der Schadinsekten-Vernichtungsvorrichtungs-Bewegungsvorrichtung (111) aufweist, so dass die Erkennungseinheit (150) für menschliche Körper den Innenraum abtastet, und um die Schadinsekten-Vernichtungsvorrichtungs-Bewegungsvorrichtung (111) zu stoppen, wenn die Erkennungseinheit (150) für menschliche Körper einen menschlichen Körper erkennt, während die Schadinsekten-Vernichtungsvorrichtungs-Bewegungsvorrichtung (111) angetrieben wird, wenn die Schadinsekten-Vernichtungsvorrichtung (102) einem von der Erkennungseinheit (150) für menschliche Körper erkannten menschlichen Körper zugewandt ist.

11. Klimaanlage nach Anspruch 10, wobei eine der Erkennungseinheit (150) für menschliche Körper oder der Schadinsekten-Vernichtungsvorrichtung (102) mit der Schadinsekten-Vernichtungsvorrichtungs-Bewegungsvorrichtung (111) verbunden ist und die andere der beiden mit der einen von ihnen verbunden ist.

## Revendications

1. Climatiseur comprenant :
un corps principal (2) dans lequel un orifice d'inhalation d'air (4) et un orifice d'évacuation d'air (6) sont formés pour évacuer de l'air après avoir inhalé de l'air et réalisé la climatisation ; et
un module d'extermination d'insectes nuisibles (100) disposé sur le corps principal (2) pour exterminer des insectes nuisibles de l'intérieur,
dans lequel le module d'extermination d'insectes nuisibles (100) comprend :
un dispositif d'extermination d'insectes nuisibles (102) pour exterminer des insectes nuisibles ; et
un dispositif de déplacement de dispositif d'extermination d'insectes nuisibles (111) pour déplacer le dispositif d'extermination d'insectes nuisibles afin d'exterminer des insectes nuisibles tout en déplaçant le dispositif d'extermination d'insectes nuisibles,
**caractérisé en ce que** le module d'extermination d'insectes nuisibles (100) comprend en outre :
un boîtier mobile (120) pour loger de manière rotative le dispositif d'extermination d'insectes nuisibles (102) ;
et
un dispositif de déplacement linéaire de boîtier mobile (110) pour déplacer linéairement le boîtier mobile (120) pour l'insérer dans le corps principal (2) ou pour faire saillie vers l'extérieur du corps principal (2).

2. Climatiseur selon la revendication 1, dans lequel le corps principal (2) a un trou de pénétration (29) pour pénétrer le boîtier mobile (120) sur une surface de fond de sorte que le boîtier mobile (120) se déplace vers le bas pour faire saillie vers le côté inférieur du corps principal (2) ou se déplace vers le haut vers l'intérieur du corps principal (2).

3. Climatiseur selon la revendication 1, dans lequel le dispositif d'extermination d'insectes nuisibles (102) comprend un haut-parleur (106) pour générer des ondes sonores pour exterminer les insectes nuisibles, et
dans le boîtier mobile (120), une ouverture (122) pour laisser passer à travers celle-ci des ondes sonores générées dans le dispositif d'extermination d'insectes nuisibles (102) est formée en long dans une direction de rotation du dispositif d'extermination d'insectes nuisibles (102).

4. Climatiseur selon la revendication 1, dans lequel le dispositif de déplacement linéaire de boîtier mobile (131) comprend :
une crémaillère (128) prévue dans le boîtier mobile ;
un pignon mobile (134) en prise avec la crémaillère ; et
un moteur mobile (130) pour faire tourner le pignon (134) de sorte que la crémaillère (128) réalise un mouvement linéaire lorsque le pignon (134) tourne.

5. Climatiseur selon la revendication 1, dans lequel le dispositif de déplacement de dispositif d'extermination d'insectes nuisibles (111) comprend un moteur de rotation (110) disposé pour faire saillie d'un axe de rotation relié au dispositif d'extermination d'insectes nuisibles (112).

6. Climatiseur selon la revendication 5, dans lequel le dispositif d'extermination d'insectes nuisibles (102) comprend :
un support de rotation (104) relié à un axe de rotation du moteur de rotation (110) ; et
un haut-parleur (106) installé dans le support de rotation (104) pour générer des ondes sonores pour exterminer les insectes nuisibles.

7. Climatiseur selon la revendication 1, dans lequel le dispositif d'extermination d'insectes nuisibles est disposé pour générer des ondes sonores vers le côté inférieur de l'avant du module d'extermination d'insectes nuisibles (100).

8. Climatiseur selon la revendication 1, dans lequel le climatiseur comprend en outre une unité de détection de corps humain (150) pour détecter un corps humain dans un intérieur dans lequel le corps principal (2) est installé, et
dans lequel le dispositif de déplacement de dispositif d'extermination d'insectes nuisibles, (111) déplace le dispositif d'extermination d'insectes nuisibles (102) dans une direction vers un corps humain détecté par l'unité de détection de corps humain (150).

9. Climatiseur selon la revendication 8, dans lequel l'unité de détection de corps humain (150) est installée pour se déplacer conjointement avec le dispositif d'extermination d'insectes nuisibles (102).

10. Climatiseur selon la revendication 9, comprenant en outre un dispositif de commande (70) pour entraîner le dispositif de déplacement de dispositif d'extermination d'insectes nuisibles (111) de sorte que l'unité de détection de corps humain (150) balaye l'intérieur, et pour arrêter le dispositif de déplacement de dispositif d'extermination d'insectes nuisibles (111) lorsque l'unité de détection de corps humain (150) détecte un corps humain tout en entraînant le dispositif de déplacement de dispositif d'extermination d'insectes nuisibles (111), si le dispositif d'extermination d'insectes nuisibles (102) fait face à un corps humain détecté par l'unité de détection de corps humain (150).

11. Climatiseur selon la revendication 10, dans lequel l'un parmi l'unité de détection de corps humain (150) et le dispositif d'extermination d'insectes nuisibles (102) est relié au dispositif de déplacement de dispositif d'extermination d'insectes nuisibles (111) et l'autre de ceux-ci est relié à l'un de ceux-ci.
